# EUROPÄISCHE PATENTSCHRIFT

(11) **EP 0 513 734 B1**
(45) Veröffentlichungstag und Bekanntmachung des Hinweises auf die Patenterteilung: **22.10.1997**
(21) Anmeldenummer: 92107979.4
(22) Anmeldetag: 12.05.1992
(51) Int. Cl.: F24F 3/16

(54) **Verfahren zum Konditionieren von Luft in einem abschliessbaren Raum sowie Prüfanordnung**
Process for conditioning air in a closable space and testing arrangement
Procédé pour le conditionnement de l'air dans un espace séparable ainsi que dispositif d'essai

(30) Priorität: 13.05.1991 DE 4115586; 15.05.1991 DE 4115915; 15.05.1991 DE 4115917
(43) Veröffentlichungstag der Anmeldung: 19.11.1992
(73) Patentinhaber: WEISS UMWELTTECHNIK GmbH, D-35447 Reiskirchen (DE)
(72) Erfinder: Hehl, Karl-Heinz, W-6300 Giessen (DE); Schubert, Hermann, W-6304 Lollar (DE); Schlosser, Volker, W-6310 Grünberg-Lehnheim (DE)
(74) Vertreter: Stoffregen, Hans-Herbert, Dr. Dipl.-Phys.

(56) Entgegenhaltungen:
- EP-A- 0 295 377
- EP-A- 0 344 397
- DE-A- 1 949 001
- US-A- 3 933 004

## Beschreibung

Die Erfindung bezieht sich auf ein Verfahren zum Konditionieren von Luft durch Einstellen deren Temperatur, vorzugsweise im Bereich von -100°C bis +200°C, und Luftfeuchtigkeit in einem abschließbaren Raum wie Klimatisierungs-prüfschrank, der Heiz- und Umwälzaggregate, einen Wärmetauscher sowie eine Wasservorlage umfaßt, wobei die Kühlung des Raums durch Verdampfen eines flüssigen Kältemittels in dem Wärmetauscher eingestellt wird.

Ferner bezieht sich die Erfindung auf eine Prüfanordnung mit einem auf eine gewünschte Temperatur vorzugsweise im Bereich von -100 °C bis +200 °C einstellbaren und im gewünschten Umfang klimatisierbaren Raum mit Wärmetauscher, Lüfter sowie im Raumboden vorhandener über eine Kühleinrichtung einstellbarer Wasservorlage, wobei dem Wärmetauscher zugeführtes Kältemittel in einem einen Verdichter, einen Verflüssiger, ein Kältemittelreservoir und ein Entspannungsventil umfassenden Kreislauf strömt.

Zur Überprüfung von physikalischen und/oder chemischen Eigenschaften von Gegenständen sind Klimaprüfschränke bekannt, in denen nicht nur Temperaturen z. B. im Bereich zwischen - 80 °C und 180 °C, sondern auch gewünschte Klimabedingungen eingestellt werden können. Die Temperierung des den zu prüfenden Gegenstand aufnehmenden Prüfraums erfolgt vorzugsweise im Umluftkanal an der Prüfraumrückwand. Dabei saugt ein Ventilator die Umluft aus dem Prüfraum und führt sie durch den Umluftkanal, in dem ein Wärmetauscher, eine Elektroheizung sowie ein Befeuchterbad eingebaut sind. Die Kühlung der Umluft erfolgt am Wärmetauscher, wohingegen die Aufheizung durch die Elektroheizung ermöglicht wird.

Die Be- bzw. Entfeuchtung der Umluft geschieht durch das als Wasserbad ausgebildete Befeuchterbad im Umluftkanal. In einem Durchlaufkühler bzw. durch einen Tauchheizkörper wird das Wasser temperiert, um im Prüfraum die geforderte Feuchte einstellen zu können.

Sofern keine besonderen Klimabedingungen, sondern nur die Temperaturen eingestellt werden sollen, wird die Prüfraumluft durch Direktverdampfung von Kälte- oder Kühlmittel im Wärmetauscher gekühlt. Soll gleichzeitig eine Klimatisierung erfolgen, kann eine Temperatureinstellung durch Verdampfung von Kälte- oder Kühlmittel nicht erfolgen, da andernfalls eine Kondensatbildung an dem Wärmetauscher erfolgen würde, wodurch die Luftfeuchtigkeit in dem Prüfraum verfälscht würde. Daher benutzt man im Klimaarbeitsbereich ein den Wärmetauscher flüssig durchströmendes Kühlfluid. Es sind also zwei getrennte Kreisläufe für Warm-/Kaltbetrieb und Klimabetrieb notwendig.

Aus der DE-OS 1 949 001 ist ein Verfahren und eine Einrichtung zur Regelung des Klimas einer Pflanzenwuchskammer bekannt, bei der eine von der Temperiereinrichtung unabhängig betriebene Klimaeinrichtung zum Einsatz gelangt, mit der Klimakonditionen, denen Pflanzen und Materialien in ihrer natürlichen Umwelt ausgesetzt sind, simuliert werden sollen.

Aus der US 3,933,004 ist ein kühlbarer Container bekannt, bei dem mittels einer Bypass-Leitung gasförmiges Kühlmittel einem flüssigen Kältemittel zugemischt wird, um auf diese Weise die Temperatur eines Verdampfers einzustellen, über den der Container temperiert wird.

Der vorliegenden Erfindung liegt die Aufgabe zugrunde, ein Verfahren zum Konditionieren von Luft durch Einstellen deren Temperatur und Luftfeuchtigkeit in einem abschließbaren Raum wie Klimatisierungsprüfschrank derart weiterzubilden, daß eine die Klimaarbeitsbedingungen verfälschende Kondensatbildung vermieden wird, ohne daß beim Einstellen der Temperatur Kühlfluide bzw. Kühlkreisläufe beim Einstellen der Luftfeuchtigkeit benötigt werden.

Das Problem wird erfindungsgemäß dadurch gelöst, daß bei einzustellender Luftfeuchtigkeit in dem Raum dem mittels eines Ventils stetig geregelten flüssigen Kältemittel vor Eintritt in den Wärmetauscher ständig gasförmiges Kältemittel beigemischt wird, so daß ein Kondensatausfall am Wärmetauscher vermieden wird.

Erfindungsgemäß wird die Prüfraumluft nicht nur bei der Temperatureinstellung (Kalt/Warmbetrieb), also bei normaler Luftfeuchtigkeit durch Direktverdampfung von Kältemittel, sondern auch bei der Einstellung der Luftfeuchtigkeit (Klimabetrieb) durch Direktverdampfung von Kältemittel gekühlt. Um dabei bei hoher Luftfeuchtigkeit im Prüfraum einen Kondensatausfall am Wärmetauscher zu vermeiden, wird dem stetig geregelten Kältemittelstrom vorzugsweise vor dem Wärmetauscher ständig ein Heißgasstrom beigemischt. Hierdurch wird die Temperaturdifferenz zwischen Kältemittel und Prüfraumluft so verringert, daß eine Unterschreitung der Taupunkttemperatur vermieden wird.

Bei dem Heißgas handelt es sich um das von dem Verdichter kommende verdampfte Kältemittel, welches seinerseits von dem Kühlaggregat stammt.

Nach einem weiteren Vorschlag der Erfindung wird zumindest bei Klimabetrieb die Wasservorlage gleichfalls durch ein Gemisch aus gasförmigem und flüssigem Kältemittel auf die gewünschte Temperatur eingestellt, wodurch eine Kondensatbildung im Bereich der die Temperatur der Wasservorlage einstellenden Kühlschlange vermieden wird, die nicht von dem Wasser bedeckt ist.

Eine Prüfanordnung der eingangs beschriebenen Art zeichnet sich dadurch aus, daß eine Verbindungsleitung zwischen der Verbindung zwischen dem Verdichter und dem Verflüssiger einerseits und der Verbindung zwischen dem Kältemittelreservoir und dem Wärmetauscher andererseits verläuft und daß von der Verbindungsleitung eine zu der zumindest teilweise in der Wasservorlage verlaufenden Kühleinrichtung führende Abzweigung ausgeht, der über eine Leitung von dem Kältemittelreservoir kommendes flüssiges Kühlmittel zuführbar ist. Dabei mündet die Verbindungsleitung vorzugsweise nach dem Entspannungsventil, also vor dem Wärmetauscher in dem Kreislauf.

Weitere Einzelheiten, Vorteile und Merkmale der Eifindung ergeben sich nicht nur aus den Ansprüchen, den diesen zu entnehmenden Merkmalen - für sich und/oder in Kombination -, sondern auch aus der nachfolgenden Beschreibung eines in der Zeichnung dargestellten bevorzugten Ausführungsbeispiels.

Es zeigen:
- Fig. 1: eine Prinzipdarstellung einer Prüfanordnung mit Klimatisierungsprüfschrank,
- Fig. 2: ein Prinzipbild eines Kälteplans.

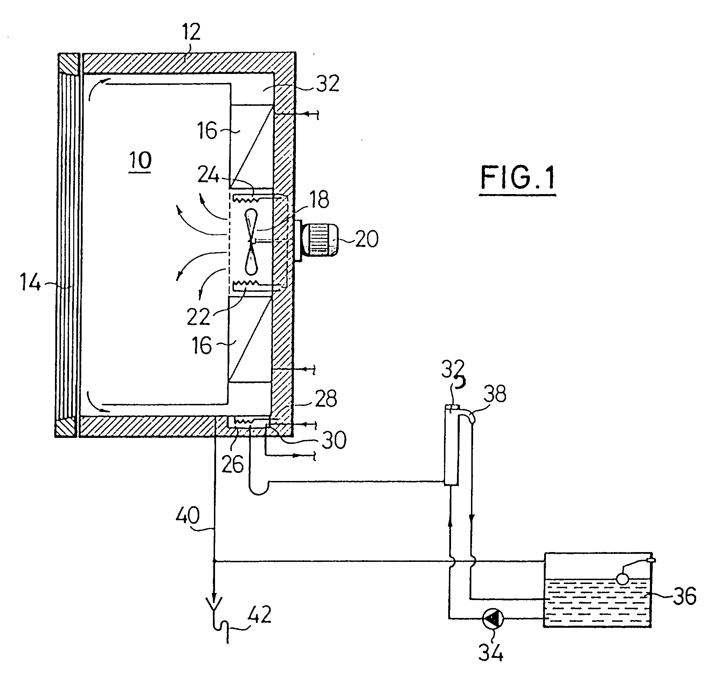

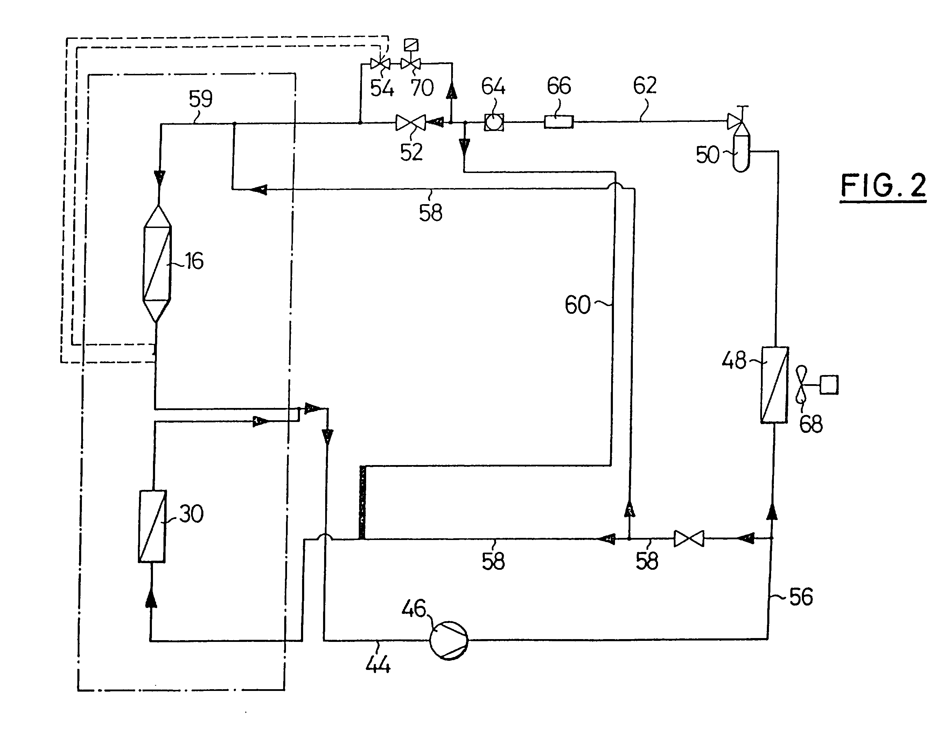

In den Fig. 1 und 2, in denen gleiche Elemente mit gleichen Bezugszeichen versehen sind, ist ein Prüfraum (10) eines Klimatisierungsschrankes (12) dargestellt, der über eine Tür (14) zugänglich ist. Um in dem Raum (10) eine gewünschte Temperatur einzustellen oder gewünschte Klimatisierungsbedingungen zu erreichen, ist ein zweiteiliger Wärmetauscher (16), ein Achsialventilator (18) mit außenliegendem Motor (20), der zwischen den Wärmetauscherteilen (16) angeordnet ist, Elektro-Glattrohrheizkörper (22) und (24), die zwischen den Wärmetauscherteilen (16) und dem Ventilator (18) angeordnet sind, sowie eine Wasservorlage (26) vorgesehen. Die Wasservorlage befindet sich im Prüfraumboden zur Be- und Entfeuchtung der Umluft. Die Erwärmung des in der Wasservorlage (26) vorhandenen Wassers erfolgt mittels einer elektrischen Heizspirale (28), die Kühlung des Wassers mittels einer Kühlschlange (30), die im unwesentlichen innerhalb des Wasser verläuft.

Die Temperieirung des Prüfraums (10) erfolgt im Umluftkanal (32) an der Prüfraumnückwand. Der Ventilator (18) saugt die Umluft aus dein Prüfraum und führt sie durch den Umluftkanal (32), in dem der Wärmetauscher (16), die Elektroheizung (22) und (24) sowie die Wasservorlage (26) eingebaut sind. Die Kühlung der Umluft, deren Verlauf innerhalb des Prüfraums (10) durch die Pfeile rein prinzipiell angedeutet ist, erfolgt an den Wärmetauscherteilen (16), wohingegen die Aufheizung durch die Elektroheizung (22) und (24) vorgenommen wird.

Die Be- bzw. Entfeuchtung der Umluft geschieht durch das in der Wasservorlage (26) befindliche Wasser. Durch das Abkühlen bzw. Aufheizen des Wasser wird dieses so temperiert, daß sich im Prüfraum (10) die geforderte Feuchte einstellt.

Die Höhe des Wasserspiegels in der Wasservorlage (26) wird durch ein Heberelement (33) selbstregulierend eingestellt, welches von einem außerhalb des Raums (12) vorhandenen Wasserreservoir (36) über eine Pumpe (34) mit Wasser versorgt wird. Der Heber (33) weist einen Auslauf (38) auf, dessen Höhe die des Wassers in der Wasservorlage (26) vorgibt. Vom Bodenbereich des Raumes (10) geht eine Leitung (40) aus, über die angesammeltes Wasser wahlweise dem Reservoir (36) oder einem Abfluß (42) zugeführt werden kann.

Um sowohl den Wärmetauscher (16) als auch die Kühlschlange (30) auf die gewünschte Temperatur einzustellen, wird ein Kältemittel wie Fluorkohlenwasserstoff oder ein entsprechendes Mittel benutzt, welches den Wärmetauscher (16) bzw. die Kühlschlange (30) gemäß dem der Fig. 2 rein prinzipiell zu entnehmenden Kälteplanes durchströmt.

Sowohl der Wärmetauscher (16) als auch die Kühlschlange (30) befinden sich in einem geschlossenen Kreislauf (44), welcher einen Verdichter (46), einen Verflüssiger (48), eine Kältemittelvorlage bzw. ein -reservoir (50) sowie nachstehend näher zu bezeichnende Entspannungsventile (52) und (54) umfaßt.

Erfindungsgemäß geht von dem den Verdichter (46) mit dem Verflüssiger (48) verbindenden Kreislaufabschnitt (56) eine Leitung (58) aus, die einerseits in der Verbindung (59) zwischen dem Entspannungsventil (52) bzw. (54) und dem Wärmetauscher (16) und andererseits in einer Leitung (60) mündet, die eine Verbindung zwischen dem zwischen dem Kältemittelreservoir (50) und dem Entspannungsventil (52) bzw. (54) verlaufenden Kreislaufabschnitt (62) und der Kühlschlange (30) herstellt.

In dem Kreislaufabschnitt (62) ist des weiteren ein Schauglas (64) sowie ein Trockner (66) bekannter Art angeordnet. Schließlich ist dem Verflüssiger (48) ein Ventilator (68) zugeordnet.

Sofern der Raum (10) nicht im Klimabetrieb genutzt wird, wird das von dem Kältemittelreservoir (50) kommende Kälte- oder Kühlmittel bei geschlossenem Expansionsventil (52) über das als thermostatisches Expansionsventil ausgebildete Expansionsventil (54) getaktet dem Wärmetauscher (16) zugeführt, in dem eine Direktverdampfung des Kältemittels erfolgt.

Dem thermostatischen Expansionsventil (54) wird dabei über ein Magnetventil (70) in Abhängigkeit von dem Kältemittelbedarf das Kälte- oder Kühlmittel getaktet zugeführt.

Sofern ein Klimabetrieb gewünscht wird, bei dem trotz Direktverdampfung des Kühlmittels im Wärmetauscher (16) ein Kondensatausfall am Wärmetauscher (16) unterbunden werden soll, wird das Expansionsventil (54) geschlossen und das als elektronisches Expansionsventil ausgebildete Expansionsventil (52) geöffnet. Gleichzeitig wird dem durch den Kreislaufabschnitt (62) von dem Kältemittelreservoir (50) kommenden Kälte- oder Kühlmittel über die Verbindungsleitung (58) ständig ein Heißgasstrom nach dem den Kühlmittelstrom stetig regelnden Expansionsventil (52) beigemischt. Dieses Heißgas wird dem Kreislaufabschnitt (56) entnommen, welches von dem Verdichter (46) kommendes Kühlmittel führt. Auch wird dem über die Leitung (60) strömenden flüssigen Kühlmittel, das der Kühlschlange (30) zugeführt wird, Heißgas, also gasförmiges Kühl mittel beigemischt, um einen Kondensatausfall im Bereich der Kühlschlange (30) auszuschließen, der außerhalb der Wasservorlage (26) verläuft.

Dadurch, daß dem flüssigen Kühlmittel gasförmiges Kältemittel beigemischt wird, wird die Verdampfungstemperatur des Kältemittels im Wärmetauscher (16) bzw. der Kühlschlange (30) soweit angehoben, daß nur geringste Temperaturdifferenzen zwischen Prüfraumluft und Wärmetauscheroberfläche vorliegen. Folglich wird auch bei hoher Luftfeuchte im Prüfraum (10) der Ausfall von Kondensat sowohl am Wärmetauscher (16) als auch an der Kühlschlange (30) vermieden.

Dadurch, daß am Wärmetauscher Fühler angebracht sind, die die Temperatur des Kältemittels erfassen, wird eine hohe Temperaturkonstanz an der Wärmetauscheroberfläche erreicht. Dies verhindert ebenfalls den Ausfall von Kondensat am Wärmetauscher (16).

## Patentansprüche

1. Verfahren zum Konditionieren von Luft durch Einstellen deren Temperatur, vorzugsweise im Bereich von -100°C bis +200°C, und Luftfeuchtigkeit in einem abschließbaren Raum wie Klimatisierungs-prüfschrank, der Heiz- und Umwälzaggregate (18, 22, 24), einen Wärmetauscher (16) sowie eine Wasservorlage (26) umfaßt, wobei die Kühlung des Raums durch Verdampfen eines flüssigen Kältemittels in dem Wärmetauscher eingestellt wird,
**dadurch gekennzeichnet,**
daß bei einzustellender Luftfeuchtigkeit in dem Raum (10) dem mittels eines Ventils stetig geregelten flüssigen Kältemittel vor Eintritt in den Wärmetauscher (16) ständig gasförmiges Kältemittel beigemischt wird, so daß ein Kondensatausfall am Wärmetauscher (16) vermieden wird.

2. Verfahren nach Anspruch 1, wobei das von dem Wärmetauscher (16) kommende Kältemittel nacheinander einem Verdichter (46), einem Verflüssiger (48) und einem Expansionsventil (52, 54) zugeführt wird,
**dadurch gekennzeichnet**,
daß ein Teil von von dem Verdichter (46) kommendem heißen gasförmigen Kältemittel dem von dem Verflüssiger (48) kommenden stetig geregelten Kältemittelstrom vorzugsweise nach dem Expansionsventil (52) beigemischt wird.

3. Verfahren nach Anspruch 1,
**dadurch gekennzeichnet,**
daß von dem Verdichter (46) kommendes gasförmiges Kältemittel mit einem von dem Verflüssiger (48) nachgeschaltetem Kältemittelreservoir (50) kommenden flüssigen Kältemittel vermischt und der Wasservorlage (26) zu deren Temperaturherabsetzung zugeführt wird.

4. Verfahren nach zumindest Anspruch 1,
**dadurch gekennzeichnet,**
daß bei Kalt-/Warmbetrieb das Kältemittel dem Wärmetauscher (16) getaktet zugeführt wird.

5. Prüfanordnung mit einem auf eine gewünschte Temperatur vorzugsweise im Bereich von - 100 °C bis + 200 °C einstellbaren und im gewünschten Umfang klimatisierbaren Raum (10) mit Wärmetauscher (16), Lüfter (18) sowie im Raumboden vorhandener über eine Kühleinrichtung (30) einstellbarer Wasservorlage (26), wobei dem Wärmetauscher zugeführtes Kältemittel in einem einen Verdichter (46), einen Verflüssiger (48), ein Kältemittelreservoir (50) und ein Entspannungsventil (52, 54) umfassenden Kreislauf (44) strömt,
**dadurch gekennzeichnet, daß**
eine Verbindungsleitung (58) zwischen der Verbindung zwischen dem Verdichter (46) und dem Verflüssiger (48) einerseits und der Verbindung zwischen dem Kältemittelreservoir (50) und dem Wärmetauscher (16) andererseits verläuft und daß von der Verbindungsleitung eine zu der zumindest teilweise in der Wasservorlage (26) verlaufenden Kühleinrichtung (30) führende Abzweigung ausgeht, der über eine Leitung (60) von dem Kältemittelreservoir kommendes flüssiges Kühlmittel zuführbar ist.

6. Prüfanordnung nach Anspruch 5,
**dadurch gekennzeichnet,**
daß die Verbindungsleitung (58) zwischen dem Entspannungsventil (52, 54) und dem Wärmetauscher (16) in dem Kreislauf (59) mündet.

## Claims

1. A process for conditioning of air by setting its temperature, preferably in the range between -100°C and +200°C, and its humidity in a lockable space such as a climate-controlled test cabinet comprising heating and circulation units (18, 22, 24), a heat exchanger (16) and a water seal (26), where cooling of the space is set by evaporation of a liquid refrigerant in the heat exchanger,
**wherein**
gaseous refrigerant is continuously admixed to the liquid refrigerant, which is continuously regulated by a valve before entering the heat exchanger (16) when the humidity in the space (10) is to be adjusted, such that the precipitation of condensate on the heat exchanger (16) is prevented.

2. A process according to Claim 1, where the refrigerant coming from the heat exchanger (16) is successively supplied to a compressor (46), a condenser (48) and an expansion valve (52, 54),
**wherein**
a part of the hot gaseous refrigerant coming from the compressor (46) is admixed with the continuously regulated refrigerant coming from the condenser (48), preferably downstream of the expansion valve (52).

3. A process according to Claim 1,
**wherein**
gaseous refrigerant coming from the compressor (46) is mixed with a liquid refrigerant coming from a refrigerant reservoir (50) downstream of the condenser (48) and passed to the water seal (26) is added to reduce its temperature.

4. A process according to Claim 1,
**wherein**
the refrigerant is supplied to the heat exchanger (16) in cyclic form in cold/hot operation.

5. A test array having a space (10) adjustable to a required temperature preferably in the range from -100°C to +200°C and climatizable to the required extent, having a heat exchanger (16), a fan (18) and a water seal (26) provided in the floor of the space and adjustable by a cooling unit (30), where the refrigerant supplied to the heat exchanger flows in a circuit (44) comprising a compressor (46), a condenser (48), a refrigerant reservoir (50) and an expansion valve (52, 54),
**wherein**
a connecting line (58) passes between the connection of the compressor (46) and the condenser (48) on the one hand and the connection of the refrigerant reservoir (50) and the heat exchanger (16) on the other hand, and a branch leading to the cooling device (30) passing at least partially through the water seal (26) extends from the connecting line, to which branch liquid refrigerant coming from the refrigerant reservoir can be supplied via a line (60).

6. A test array according to Claim 5,
**wherein**
the connecting line (58) between the expansion valve (52, 54) and the heat exchanger (16) passes into the circuit (59).

## Revendications

1. Procédé de conditionnement d'air par le réglage de sa température, de préférence dans une plage comprise entre -100°C jusqu'à +200°C et l'humidité, dans une enceinte fermée telle qu'une armoire d'essai de climatisation, comprenant une unité de chauffage et de mise en circulation (18, 22, 24), un échangeur de chaleur (16) ainsi qu'une réserve d'eau (26), le refroidissement de l'enceinte se faisant par évaporation d'un agent réfrigérant liquide dans l'échangeur de chaleur,
caractérisé en ce que
pour régler l'humidité de l'air dans l'enceinte (10), on mélange en permanence un agent frigorifique gazeux à l'agent frigorifique liquide, régulé en permanence à l'aide d'une vanne avant l'entrée dans l'échangeur de chaleur (16) pour éviter la condensation sur l'échangeur de chaleur (16).

2. Procédé selon la revendication 1 selon lequel l'agent frigorifique venant de l'échangeur de chaleur (16) passe successivement dans un compresseur (46), un condenseur (48) et une vanne d'expansion (52, 54),
caractérisé en ce que
une partie de l'agent frigorifique gazeux, chaud venant du compresseur (46) est mélangé de préférence en aval de la vanne d'expansion (52) au flux d'agent frigorifique réglé en permanence venant du condenseur (48).

3. Procédé selon la revendication 1,
caractérisé en ce que
l'agent frigorifique gazeux venant du compresseur (46) est mélangé à un agent frigorifique liquide venant du réservoir d'agent frigorifique (50) en aval du condenseur (48) et la réserve d'eau (26) pour en abaisser la température.

4. Procédé au moins selon la revendication 1,
caractérisé en ce que
pour un fonctionnement froid/chaud, l'agent frigorifique est fourni de manière cadencée à l'échangeur de chaleur (16).

5. Dispositif de contrôle réglable à une température souhaitée, de préférence comprise dans une plage entre -100°C jusqu'à +200°C, et une enceinte (10) climatisée comme souhaité comprenant un échangeur de chaleur (16), un ventilateur (18) ainsi qu'une réserve d'eau (26) réglable dans le fond de l'enceinte par une installation de refroidissement (30), le fluide frigorifique fourni à l'échangeur de chaleur passant dans un circuit (44) comprenant un compresseur (46), un condenseur (48), un réservoir d'agent frigorifique (50) et une vanne de détente (52, 54),
caractérisé en ce qu'
• une conduite de liaison (58) relie, d'une part la liaison entre le compresseur (46) et le condenseur (48) et d'autre part la liaison entre le réservoir d'agent frigorifique (50) et l'échangeur de chaleur (16), et
• la conduite de liaison comporte une dérivation reliée à l'installation de refroidissement (30) passant en partie dans la réserve d'eau (26), conduite qui reçoit l'agent frigorifique liquide venant du réservoir d'agent frigorifique par une conduite (60).

6. Dispositif de contrôle selon la revendication 5,
caractérisé en ce que
la conduite de liaison (58) débouche dans le circuit (59) entre la vanne de détente (52, 54) et l'échangeur de chaleur (16).
